Europäisches Patentamt

European Patent Office

Office européen des brevets

(19)

(11) Publication number: **0 081 027**
**B1**

(12) **EUROPEAN PATENT SPECIFICATION**

(45) Date of publication of patent specification: **17.09.86**

(21) Application number: **81830243.2**

(22) Date of filing: **09.12.81**

(51) Int. Cl.⁴: **G 01 N 1/28**, G 02 B 21/28 // A61B10/00

(54) **Apparatus for intraoperative diagnosis.**

(43) Date of publication of application:
**15.06.83 Bulletin 83/24**

(45) Publication of the grant of the patent:
**17.09.86 Bulletin 86/38**

(84) Designated Contracting States:
**AT BE CH DE FR GB LI LU NL SE**

(56) References cited:
**DE-A-2 704 300**
**FR-A-1 403 270**
**GB-A- 5 762**
**GB-A-1 023 597**
**US-A-3 580 658**

(73) Proprietor: **DESCHAMPS s.a.s.**
**Corso F.lli Rosselli 82**
**I-10128 Torino (IT)**

(72) Inventor: **Palmieri, Beniamino**
**Via Bisi, 125**
**I-41100 Modena (IT)**

(74) Representative: **Bianchetti, Giuseppe**
**Studio Consulenza Brevettuale Via Rossini, 8**
**I-20122 Milan (IT)**

Courier Press, Leamington Spa, England.

EP 0 081 027 B1

## Description

The present invention relates to apparatuses for intraoperative diagnosis by means of "freeze imprinting". This apparatus will be defined hereinbelow for short as a "cryoappositor".

At present, intraoperative diagnosis is based on the use of the freezing cryotome. In actual practice, the surgeon takes a section of the tissue from the diseased part of the patient and gives this section to the pathologist who first freezes the section of the tissue and then cuts it in sections, applies color and carries out in this manner the microscopic diagnosis.

A complementary method, although inaccurate, consists of different technique, namely simply apposition of the operative section. In this manner in general, very small amounts of cellular material is obtained, frequently in poor condition because of the mechanical stresses due to sliding to which the cellular material has been subjected.

The examination of the prior art revealed the existence of DE—A—2 704 300, according to which a little cylinder of anatomic material, in a suitable apparatus, is submitted to the action of a blade which prepares a fresh surface on the cylinder. Immediately after the cut, the surface is "fixed" by immersion of the cylinder in a refrigerating fluid (for instance liquid nitrogen).

It is evident that the obtained sample shows a remarkable thickness, and the tested surface suffers the damages caused by the friction inevitably produced by the blade.

Other apparatuses are also known to cool anatomic samples (see U.K. Patent 1 023 597), or to cool the sample on a microscope slide (French Patent 1 403 270), or to cool the slide body of a microscope (U.S. Patent 3 580 658); it is evident that these apparatuses aim to purposes and functions quite different from the object of the present invention. The cryoappositor according to the present invention permits to achieve very substantial advantages with respect to the two previously known methods because essentially, it permits to achieve a histological analysis in a monolayer. In fact, the apparatus according to the present invention is based on an original concept according to which the microscopic reproduction of a normal or a pathological organ is so much more trustworthy and accurate, the thinner is the layer of cells being examined under the microscope. Indeed the ideal conditions would be to examine a monocellular layer which reproduces the structure exactly. In this manner one will see in the positive picture the cells of the parenchyma, that is, the epithelial and other tissues which perform the special functions of the organ and in the negative picture vessels and connective tissue, and stroma which will form some pockets. The pockets may be interpreted also quantitatively.

The concept is realized according to the present invention by creating a thermic shock between the section of the organ and the slide which is used as support in such a manner that as a result of the temperature gradient the cells are induced to exfoliate to form a monolayer on the slide, while keeping intact the submicroscopic arrangement, and particularly the enzymatic liposomial arrangement. In order to illustrate the method according to the present invention, it is proper to refer to the sensation of cold which one receives when he touches with naked hands a frozen surface. It is well known that one receives a sensation of instantaneous adhesiveness between the two systems at different temperature. In reality if the cold surface is at a sufficiently low temperature, the hands leave on the surface a thin cellular layer.

The cryoappositor according to the present invention consists essentially of the following: 1) a refrigerating device including a cryogenic liquid adapted to sprinkle said cryogenic liquid on one surface of a slide so as to lower the temperature of the surface to at least about —4°C; 2) at least one cooling fan to favor the evaporation of the cryogenic liquid and to contribute to achieve on the slide the necessary hypothermia and 3) an automatic appositor which may be adjusted with a thermostat to a predetermined temperature and which permits to exert a pressure in predetermined and measurable amounts, depending on the organ being examined, on the section of the organ which is interposed between the appositor and the slide at the time when this slide has reached a predetermined ideal temperature. Optionally, the apparatus also comprises a device for automatically advancing the slide which permits to achieve several appositions on the same slide at different pressure.

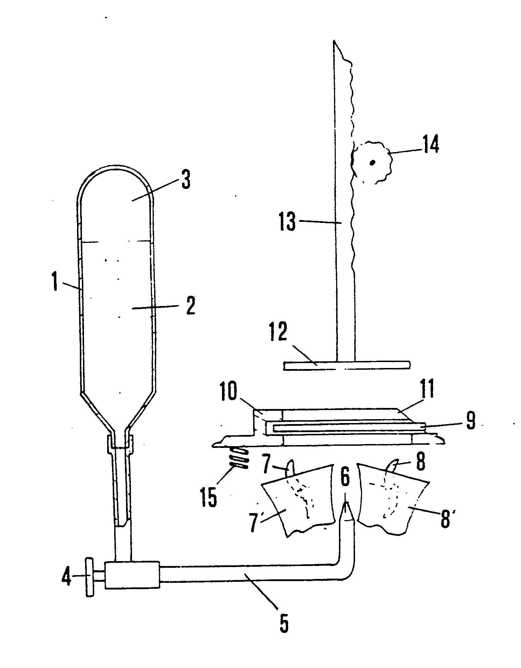

FIG. 1 illustrates schematically the cryoappositor according to the present invention.

By reference to FIG. 1, numeral 1 is a cylinder of cryogenic liquid, for instance ethyl chloride which is designated by numeral 2.

Numeral 3 is a gas slightly pressurized above the level of the cryogenic liquid. Numeral 4 is a faucet which permits the liquid 2 to reach by means of the circuit 5 nozzle 6 so that it is possible to sprinkle the same liquid on a limited and focalized portion of the slide 9. Numerals 7 and 8 represent fans which direct a jet of air suitably delimited by deflectors 7' and 8' on the lower surface of the slide so that the evaporation of the cryogenic liquid is accelerated. In this manner the cooling of the slide is rendered more rapid. The latter is controlled by suitable guides 10 and 11 which permit the lateral sliding. The anatomic section to be exfoliated is placed on the slide 9 and is compressed on it by means of appositor 12. The latter by means of a toothed shaft 13 and a toothed wheel 14 in a pinion-gear arrangement exerts a graduated pressure on the section being analyzed. The anatomic section is then pressed onto the slide 9 after the latter has reached a stationary temperature. This usually occurs 3—4 minutes after the faucet 4 has been opened and after simultaneously the cooling fan of fans have been put in operation.

Eventually the guides 10 and 11 and consequently, also the slide 9 are subjected to vibration by means of a motor, schematically represented in the figure by numeral 15 which permits to subject the anatomic section to a mechanical shock which overlaps with the thermic shock and facilitates the exfoliation.

Finally, the apparatus may be provided with a device for automatically advancing the slide 9 so that several appositions at different pressures may be made on the same slide and informaiton may be obtained with respect to the degree of separation of the cells after the second, third, fourth, etc. apposition. In this manner, it is possible to reconstruct, layer by layer, the properties of the tissue which would result indistinguishable by means of a conventional histological examination. The degree of cellular adhesion to the cooled slide may be assumed also to be an indication of the density of the neoplasiae.

It is clear from the foregoing that the apparatus illustrated in the figure and described hereinabove may be modified within the scope of the present invention as claimed. For instance, the fans 7 and 8 and vibrating device 15 may be electrically activated by a battery or by electric current. The cryogenic liquid may consist in the case in which it is desirable to achieve particular effects, of gaseous material which can remain in the liquid state at very low temperatures, such as liquid nitrogen. The pressurized gas 3 may consist of the same vapors of the cryogenic liquid and the exit of the same liquid at the time the faucet is opened may be accelerated, for instance, by means of a sleeve which has a warming effect and which is applied around the cylinder. A characteristic of the cryoappositor according to the present invention which may not be overlooked consists of its small dimensions, at the most in the range of 30—40 cm., a feature which makes it extremely easy to handle and very easy to transport.

The cooling time varies from one bioptic section to another and also depends upon the thickness of the slide, but in any event, the period of time is very short, being always in the range of a few tenths of a second. At the end of a cooling period, the section is removed with tweezers, the slide is removed from the guide and the slide is then read for instantaneous application of color. According to another embodiment, the slide may be precolored, in which case the system requires not more than 3—5 minutes total from the time when the apparatus begins to be in operation up to the time when the slide is ready for the diagnostic analysis.

The experiments which have been carried out with the apparatus according to the present invention permit to conclude that in a very short time one can achieve information with respect to:

1) structure of the parenchima being examined which undergoes exfoliation in the form of monolayer on the slide.

2) properties of the parenchima with respect to the density of the cells which have undergone desquamation.

3) the presence in the negative of vascular structures.

4) density of the cells in successive appositions as an index of the excess of cellular layers with respect to the possibility of the stroma being bound.

In addition, the cryoappositor device according to the present invention permits to achieve a very substantial detailed diagnostic study of the cells with respect to the nucleus, nucleoli, mitosis, the presence of mast cells and their quantitization ratio between cells and cells; in case of tumors, the relationship between neoplastic cells and normal cells; relationship between tissues which are immuno-reactive and normal tissues or pathological tissues as in the case of infiltration in the liver of inflammatory substances or phlogistic reactions in areas of tumors to be examined in detail.

## Claims

1. An apparatus for intraoperative diagnosis which comprises an appositor (12) and a refrigerating device including a cryogenic liquid (2), characterized in that said device is adapted to sprinkle said cryogenic liquid (2) on one surface of a slide (9) whereby said one surface of the slide (9) is cooled to at least −4°C, and in that there is provided at least one cooling fan (7), (8) which increases the evaporation of the cryogenic liquid (2) and permits the necessary hypothermia to be achieved on the slide (9); an automatic appositor (12) which permits a measurable and graduated pressure to be exerted onto the section of an organ which has been interposed between said appositor (12) and the other side of the slide (9) when said slide (9) has fallen to a predetermined temperature.

2. The apparatus according to claim 1 wherein means are provided for bringing said appositor (12) to a predetermined temperature.

3. The apparatus according to claim 1 wherein there is provided means for automatically advancing said slide (9) whereby several appositions may be carried out on the same slide (9).

4. The apparatus according to claim 3 wherein the appositor (12) is provided with means (13), (14) for varying automatically the pressure during the advance of the slide (9).

5. The apparatus according to claim 1 wherein the refrigerating device comprises a cylinder (1) containing a cryogenic liquid (2).

6. The apparatus according to claim 1 wherein the refrigerating device comprises a nozzle (6) capable of sprinkling the cryogenic liquid (2) and capable of being oriented onto the central portion of the slide (9).

7. The apparatus according to claim 1 wherein the cryogenic liquid (2) is ethyl chloride or other liquid having a low boiling point.

8. The apparatus according to claim 1 wherein the cryogenic liquid (2) consists of a liquefied gas.

9. The apparatus according to claim 8 wherein the liquefied gas is nitrogen.

10. The apparatus according to claim 1 which comprises means for increasing the rate of exit of the liquid from the cylinder.

11. The apparatus according to claim 10 wherein said means are a pressurized gas (3) above the liquid (2) in said cylinder (1).

12. The apparatus according to claim 10 wherein said means are means for warming said cylinder (1).


**Revendications**

1. Appareil pour le diagnostic intra-opératoire, comprenant un applicateur (12) et un dispositif réfrigérant comportant un liquide cryogénique, caractérisé en ce que ledit dispositif est apte à projeter ledit liquide cryogénique (2) sur une surface d'un coulisseau (9) de façon à refroidir cette surface au moins jusqu'à −4°C, en ce qu'il est prévu au moins un ventilateur de refroidissement (7, 8) qui augmente l'évaporation du liquide cryogénique (2), et permet d'atteindre l'hypothermie nécessaire sur le coulisseau (9), et un applicateur automatique (12) qui permet d'exercer une pression mesurable et graduée sur la section d'un organe qui a été interposée entre ledit applicateur (12) et l'autre face du coulisseau (9) quand celui-ci est descendu à une température prédéterminée.

2. Appareil selon la revendication 1, dans lequel il est prévu des moyens pour amener ledit applicateur (12) à une température prédéterminée.

3. Appareil selon la revendication 1, dans lequel il est prévu des moyens pour avancer automatiquement ledit coulisseau (9) si bien qu'on peut faire plusieurs applications sur le même coulisseau (9).

4. Appareil selon la revendication 3, dans lequel l'applicateur (12) est pourvu de moyens (13, 14) pour faire varier automatiquement la pression pendant l'avance du coulisseau (9).

5. Appareil selon la revendication 1, dans lequel le dispositif réfrigérant comprend un cylindre (1) contenant un liquide cryogénique (2).

6. Appareil selon la revendication 1, dans lequel le dispositif réfrigérant comprend und tuyère capable de projeter le liquide cryogénique (2) et qui peut être orientée vers la partie centrale du coulisseau (9).

7. Appareil selon la revendication 1, dans lequel le liquide cryogénique (2) est le chlorure d'éthyle ou un autre liquide à bas point d'ébullition.

8. Appareil selon la revendication 1, dans lequel le liquide cryogénique (2) est un gaz liquéfié.

9. Appareil selon la revendication 8, dans lequel le gaz liquéfié est de l'azote.

10. Appareil selon la revendication 5, et comprenant des moyens pour augmenter le débit du liquide sortant du cylindre.

11. Appareil selon la revendication 10, dans lequel lesdits moyens consistent en un gaz sous pression (3) surmontant le liquide (2) dans le cylindre (1).

12. Appareil selon la revendication 10, dans lequel lesdits moyens sont des moyens de chauffage dudit cylindre (1).


**Patentansprüche**

1. Einrichtung für intraoperative Diagnose, umfassend einen Anlagerer (12) und eine Kühleinrichtung, die eine kryogene Flüssigkeit (2) aufweist, dadurch gekennzeichnet, daß die Einrichtung dazu geeignet ist, die kryogene Flüssigkeit (2) auf eine Oberfläche eines Schiebers (9) zu sprengen, wodurch die erwähnte eine Oberfläche des Schiebers (9) auf wenigstens −4°C gekühlt wird, und daß wenigstens ein Kühlgebläse (7), (8) vorgesehen ist, welches die Verdampfung der kryogenen Flüssigkeit (2) erhöht und es ermöglicht, die notwendige Unterkühlung auf dem Schieber (9) zu erreichen; wobei ein automatischer Anlagerer (12) vorgesehen ist, welcher es ermöglicht, einen meßbaren und abgestuften Druck auf den Abschnitt eines Organs auszuüben, das zwischen den Anlagerer (12) und die andere Seite des Schiebers (9) eingefügt worden ist, als der Schieber (9) auf eine vorbestimmte temperatur abgefallen war.

2. Einrichtung nach Anspruch 1, dadurch gekennzeichnet, daß eine Einrichtung zum Bringen des Anlagerers (12) auf eine vorbestimmte Temperatur vorgesehen ist.

3. Einrichtung nach Anspruch 1, dadurch gekennzeichnet, daß eine Einrichtung zum automatischen Vorschieben des Schiebers (9) vorgesehen ist, wodurch mehrere Anlagerungen auf dem gleichen Schieber (9) ausgeführt werden können.

4. Einrichtung nach Anspruch 3, dadurch gekennzeichnet, daß der Anlagerer (12) mit einer Einrichtung (13), (14) zum automatischen Variieren des Drucks während des Vorschiebens des Schiebers (9) versehen ist.

5. Einrichtung nach Anspruch 1, dadurch gekennzeichnet, daß die Kühleinrichtung einen Zylinder (1) umfaßt, der eine kryogene Flüssigkeit (2) enthält.

6. Einrichtung nach Anspruch 1, dadurch gekennzeichnet, daß die Kühleinrichtung eine Düse (6) umfaßt, die in der Lage ist, die kryogene Flüssigkeit (2) zu sprühen, und die in der Lage ist, auf den mittigen Teil des Schiebers (9) gerichtet zu werden.

7. Einrichtung nach Anspruch 1, dadurch gekennzeichnet, daß die kryogene Flüssigkeit (2) Ethylchlorid oder eine andere Flüssigkeit ist, die einen niedrigen Siedepunkt hat.

8. Einrichtung nach Anspruch 1, dadurch gekennzeichnet, daß die kryogene Flüssigkeit (2) aus einem verflüssigten Gas besteht.

9. Einrichtung nach Anspruch 8, dadurch gekennzeichnet, daß das verflüssigte Gas Stickstoff ist.

10. Einrichtung nach Anspruch 1, dadurch gekennzeichnet, daß sie Mittel zum Erhöhen der Rate des Austritts der Flüssigkeit aus dem Zylinder umfaßt.

11. Einrichtung nach Anspruch 10, dadurch 12. Einrichtung nach Anspruch 10, dadurch gekennzeichnet, daß das Mittel eine Einrichtung zum Erwärmen des Zylinders (1) ist.

gekennzeichnet, daß das Mittel ein unter Druck stehendes Gas (3) oberhalb der Flüssigkeit (2) in dem Zylinder (1) ist.